# EUROPÄISCHE PATENTSCHRIFT

(11) **EP 0 393 410 B1**
(45) Veröffentlichungstag und Bekanntmachung des Hinweises auf die Patenterteilung: **25.05.1994**
(21) Anmeldenummer: 90106212.5
(22) Anmeldetag: 31.03.1990
(51) Int. Cl.: B64C 27/20, B64C 27/10

(54) **Fluggerät mit einem gegensinnig drehenden Rotorpaar**
Aircraft with a pair of contra-rotating propellers
Appareil aérospatial avec deux hélices tournant en sens inverse

(30) Priorität: 19.04.1989 CH 1492/89
(43) Veröffentlichungstag der Anmeldung: 24.10.1990
(73) Patentinhaber: Sky Disc Holding SA, CH-1700 Fribourg (CH)
(72) Erfinder: Bucher, Franz, CH-4058 Basel (CH)
(74) Vertreter: Blum, Rudolf Emil Ernst

## Beschreibung

Die Erfindung betrifft ein Fluggerät gemäß oberbegriff des ersten Patentanspruchs. Fluggeräte dieser Art sind in der Form von Helikoptern allgemein bekannt. Insbesondere sind Helikopter bekannt, welche mehrere gegensinnig drehende Rotoren besitzen, womit sich ein Drehmomentausgleich zwischen den Rotoren ergibt. Diese können bekannterweise übereinander liegend angeordnet sein.

Dabei ergeben sich einige schwerwiegende Nachteile, welche die Einsatzmöglichkeiten solcher Fluggeräte wesentlich einschränken. So ist etwa die Rotorachse im Schwerpunkt des Fluggeräts gelegen, was den nutzbaren Raum beschränkt. Die mechanische Ausgestaltung von Antrieb und Steuerung ist besonders bei übereinander angeordneten Rotoren äusserst komplex. Die Steuerfunktionen sind kompliziert und verlangen hohes Geschick. Die Geschwindigkeit im Vorwärtsflug ist beschränkt durch die Unsymmetrie der Anströmung der Rotorblätter und die dadurch auftretenden mechanischen Belastungen der Rotoren. Schliesslich stellen die freien Rotoren oft die Ursache von Flugunfällen dar, indem schon die geringste Berührung mit festen Gegenständen zu unabsehbaren Auswirkungen auf die Auftriebseigenschaften und die Steuerfähigkeit des Fluggeräts führen.

Drehflügelflugzeuge mit gegenläufigen Rotoren sind z.B. aus der Schweizer Patentschrift Nr. 558 737, aus der australischen PS-Nr. 474 805 sowie aus den US-PS 2 777 649, 2 395 876 und 2 461 435 bekannt, wobei die Rotoren teilweise innerhalb eines Gehäuses angeordnet und Luftführungen vorgesehen sind. Die Anordnung der Luftführungen bzw. Lamellen gestattet indessen keine sichere Beherrschung der Fluglagen und Bewegungen dieser Fluggeräte im Schwebeflug. Ferner sind die Steuervorgänge unübersichtlich und kompliziert, so dass im praktischen Betrieb Schwierigkeiten in der Beherrschung dieser Fluggeräte auftreten dürften.

Es stellt sich die Aufgabe, ein Fluggerät der eingangs erwähnten Art zu schaffen, das diese Nachteile nicht aufweist und das insbesondere zwei Flugzustände, nämlich einen helikopterähnlichen Schwebeflug und einen Flächenflug ermöglicht, ohne dass Steuerungsprobleme auftreten.

Erfindungsgemäss wird diese Aufgabe durch die Merkmale von Anspruch 1 gelöst. Insbesondere die paarweise gegenläufige Schwenkbarkeit jeweils benachbarter der Lamellen in den beim Schwebeflug aktiven Sektoren gestattet einen kontrollierten Schwebeflug ohne ungewollte Vortriebskomponenten.

Vorzugsweise weisen die Luftführungen Vortriebsbereiche auf, in denen die Lamellen in ihrem Anstellwinkel gleichsinnig gegenüber dem Rotorstrahl steuerbar sind. Diese Bereiche dienen zur Erzeugung des Vortriebs im Flächenflug und im Schwebeflug sowie zur Steuerung der Lage um die Hochachse im Schwebeflug.

Bei einer bevorzugten Ausführungsart sind die steuerbaren Luftführungen sektoriell angeordnete, grösstenteils tangential verlaufende Lamellen, wobei die Lamellensektoren je etwa 30 Grad umfassen und je einen Steuerantrieb aufweisen, wobei die Steuerantriebe gemäss den Steuersignalen gruppenweise zusammenschaltbar sind. Durch geeignetes Zusammenwirken der Ablenkung des Rotorstrahls in jeder der zusammengeschalteten Gruppen kann die Bewegung des Fluggeräts auf einfache Weise kontrolliert werden.

Nachfolgend wird nun anhand der Zeichnung ein Ausführungsbeispiel der Erfindung näher erläutert. Es zeigen:
Fig. 1 die Ansicht auf einen radialen Schnitt durch eine Hälfte des Fluggeräts, gemäss einer ersten Ausführung.
Fig. 2 eine vergrösserte Teilansicht nach Fig. 1;
Fig. 3 eine Aufsicht, teilweise mit weggelassener oberer Abdeckung des Fluggeräts nach Fig. 1;
Fig. 4 eine schematische Ansicht des Fluggerätes von unten;
Fig. 5 eine detaillierte Darstellung Lamellen sowie eines Rotors und seiner Lagerung;
Fig. 6 eine Ansicht auf einen radialen Schnitt einer zweiten Ausführung des erfindungsgemässen Fluggeräts mit Strahlturbinenantrieb;
Fig. 7 eine Aufsicht, teilweise mit weggelassener oberer Abdeckung des Fluggeräts nach Fig. 6.
Fig. 8 eine schematische Ansicht einer weiteren Ausführung des Fluggeräts mit abgeänderten Luftführungen;
Fig. 9 eine Lamellenausgestaltung für die Vortriebssektoren in offenem, und
Fig. 10 in geschlossenem Zustand.

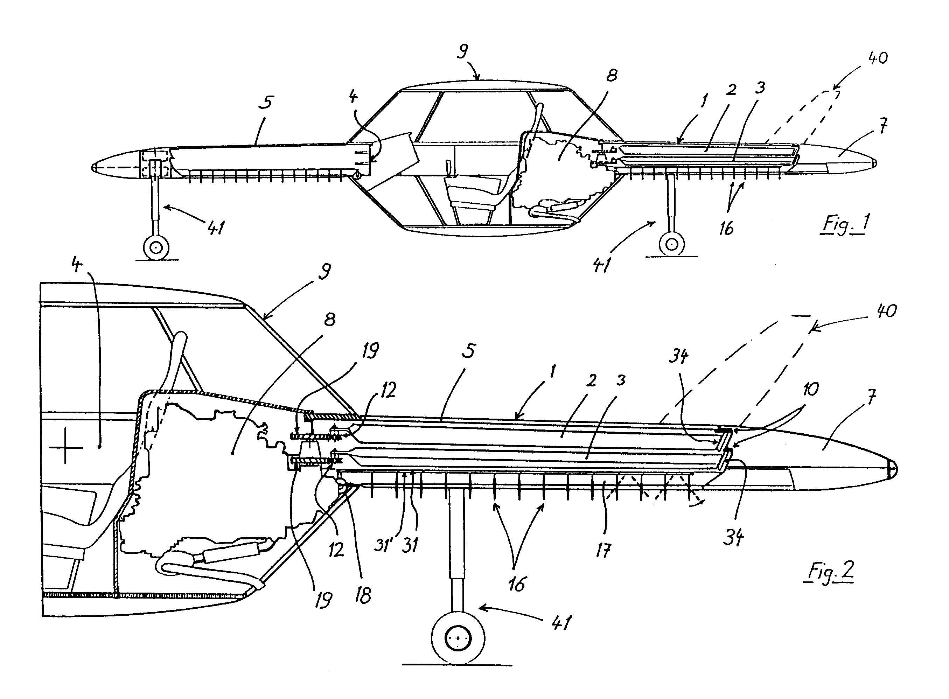

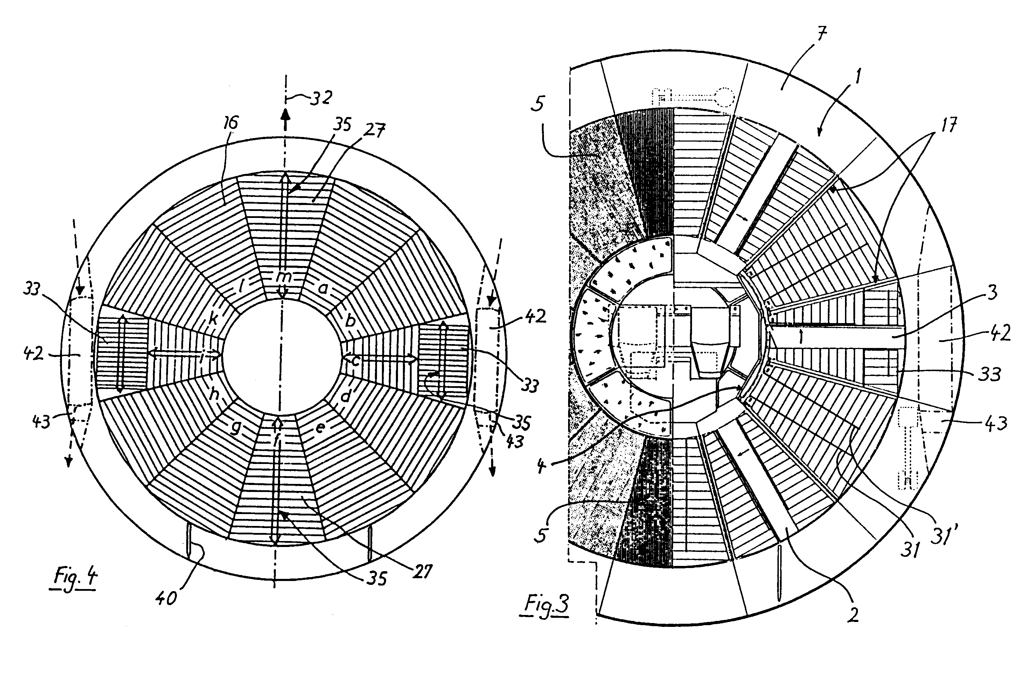

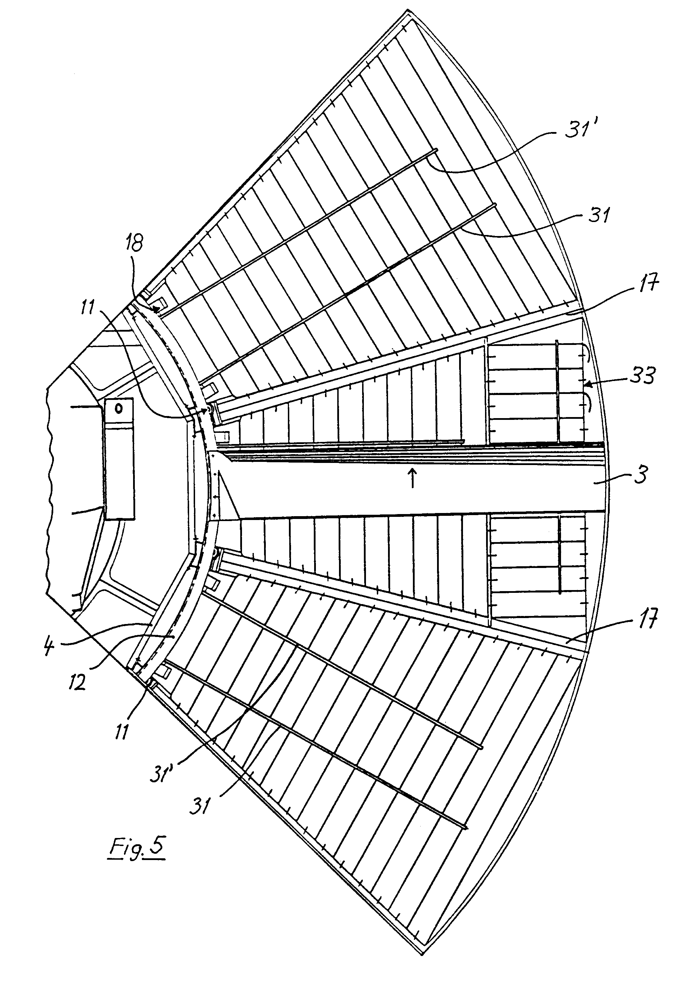

Zunächst soll mit Hilfe von Fig. 1 bis 3 der grundsätzliche Aufbau des Fluggeräts erläutert werden. Grundelement ist ein Gehäuse 1, in welchem ein Rotorenpaar 2,3 angeordnet ist, welches gegensinnig angetrieben wird. Das Gehäuse 1 selbst ist scheibenförmig ausgestaltet. In seinem Längsquerschnitt weist es ein bei Anströmung auftriebserzeugendes Profil auf, während es in Aufsicht im wesentlichen kreisförmig aufgebaut ist. Das Gehäuse bildet damit einen Kreisflügel, der neben dem Schwebeflug auch Flugzustände zulässt, welche denjenigen von Flächenflugzeugen entsprechen, dh. angetriebener Vorwärtsflug oder Gleitflug. Der Vortrieb wird dabei mindestens zu erheblichem Teil vom Rotorenpaar 2,3 unter entsprechenden Umlenkungen und Führung des Rotorstrahls erzeugt, wie noch näher erläutert wird.

Das im Gehäuse angeordnete Rotorenpaar 2,3 bildet zusammen mit verstellbaren Lamellen 16 einen ringförmigen Kanal für die sektorweise steuerbare Luftführung des Rotorstrahls. Im Zentrum und damit im Bereich des Schwerpunkts ist eine Kabine 9 zur Aufnahme des Antriebsaggregats 8, des Piloten, der Passagiere und der Nutzlast vorgesehen. Die Kabine 9 ist radial begrenzt durch einen zwölfeckigen, zylindrischen Tragteil 4, an welchem unten in Radialrichtung Streben 17 mit Dreiecksprofil zu einem ringförmigen Aussenteil 7 führen. Die genannten Elemente bilden zusammen eine tragende, steife Struktur. Sie sind vorzugsweise aus hochfestem, leichtem Material, wie z.B. kohlefaser-oder kevlararmiertem Kunststoff aufgebaut. Der zylindrische Tragteil 4 bildet einen zentralen, offenen Raum,in dem die Kabine 9 ausgebildet ist, welche sich beim dargestellten Ausführungsbeispiel hauptsächlich in der Rotorebene im Innenteil 4 selbst befindet, von oben zugänglich ist und zwei Personen Platz bietet.

Die Antriebs- und Steueraggregate befinden sich im unteren bzw. in Flugrichtung hinteren Bereich des Innenteils 4.

Am Tragteil 4 sind Lagerrollen 11 vorgesehen, auf denen die Rotoren 2,3 mit ihren inneren Antriebsringen 12 gelagert sind, wie sich insbesondere aus Fig. 5 entnehmen lässt. Zur Aufnahme axialer Kräfte sind diese Lager 11 schräg zur Rotorebene angestellt. Die Antriebsringe 12 können mit Vorteil direkt Teile des Lagers selbst bilden.

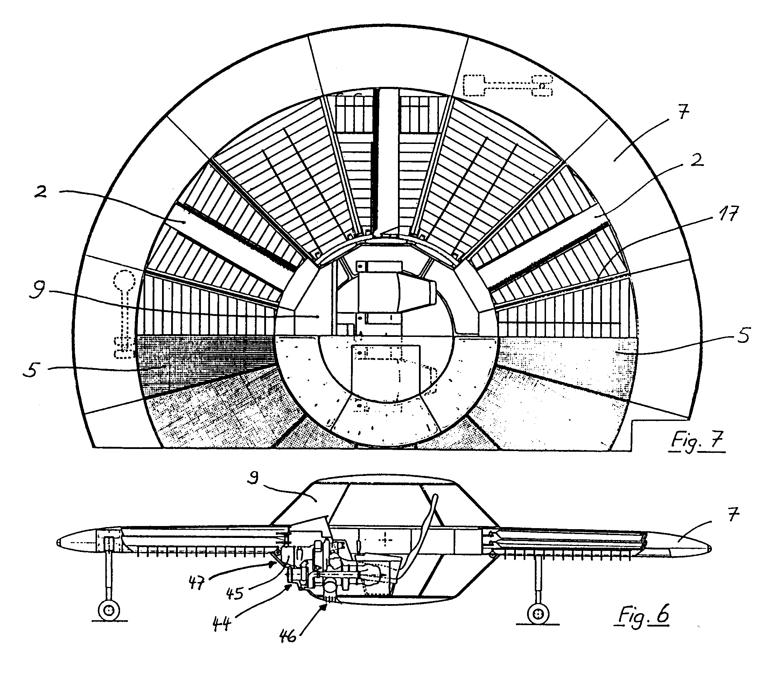

Am ringförmigen Aussenteil 7 sind feststehende Führungen 10 vorgesehen, auf welchen Aussenrollen 34 laufen, die aussen an den Rotorblättern angeordnet sind (vgl. Fig. 2). Die äusseren Führungen 10 sowie die Ablaufflächen der Lagerrollen sind mit einem geräuschdämpfenden Elastomerwerkstoff versehen, z.B. einem resistenten Kautschuk, wie Neopren. Alternativ kann auf die äussere Führung der Rotorblätter verzichtet werden, wenn diese ausreichend steif ausgebildet sind, so dass ihre Auslenkung unter Belastung innerhalb der durch die Konstrukion gegebenen Toleranzen verbleiben.

Die jeweils drei Rotorblätter, die sich gemäss den hier dargestellten Ausführungen je Rotor zwischen dem inneren Antriebsring 12 und der äusseren Führung 10 erstrecken, weisen ein geeignetes, Auftrieb erzeugendes Blattprofil auf.

Ihr Anschluss an die Antriebsringe 12 (bzw. die Aussenrollen 34, sofern vorhanden) kann gelenklos sein, da dank dem Gehäuse nur kleinere Wechselkräfte auf die Rotoren auftreten.

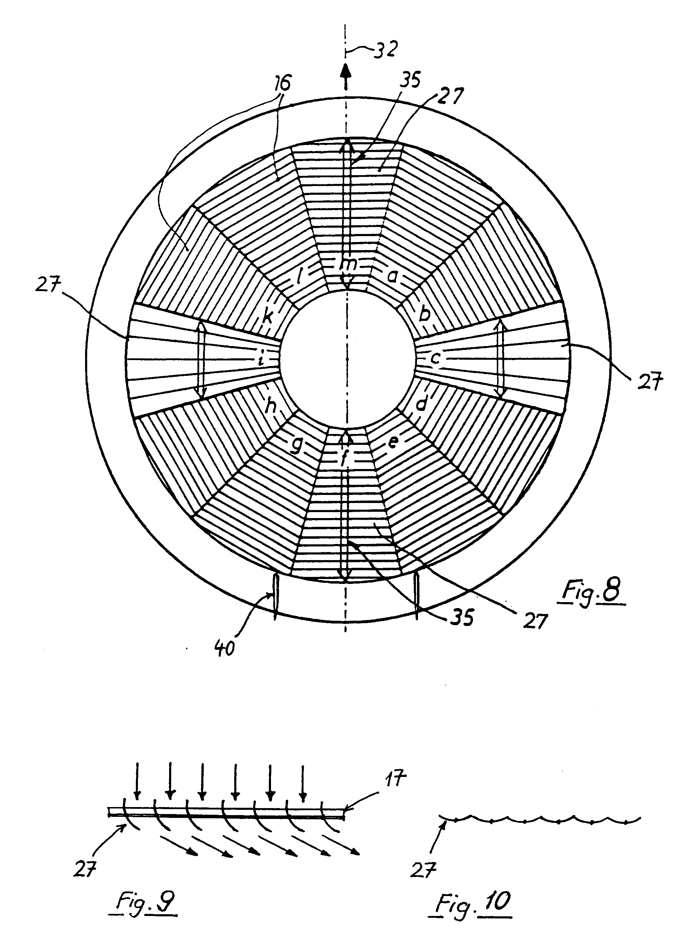

Der Antrieb der Rotoren 2,3 erfolgt mittels eines gemeinsamen Aggregats 8, das im zylindrischen Innenteil 4 angeordnet ist. Im Ausführungs-Beispiel gemäss Figuren 1 bis 3, ist das Aggregat ein Kolbenmotor mit einer Leistung von z.B. 220 WPS. Dieser treibt über ein Getriebe zwei Zahnräder 19, welche in den beiden Antriebsringen 12 der Rotoren 2,3 kämmen. Ein weiteres Ausführungsbeispiel mit Strahlturbinenantrieb wird anhand der Figuren 6 und 7 noch erläutert.

Durch den Antrieb wird eine zwangsläufig exakt gegenläufige Rotorendrehung bewirkt, was zu einem vollständigen Drehmomentausgleich führt. Allfällig auftretende Restdrehmomente auf das Gehäuse 1 können mit der noch zu beschreibenden Steuerung ausgetrimmt bzw. korrigiert werden.

Die Gehäuseteile oberhalb und unterhalb der Rotorebene sind für einen ausreichenden Luftdurchtritt ausgestaltet. Die obere Abdeckung, welcher keine Tragfunktion zukommen muss, ist durch eine Aussenhaut 5 mit Luftöffnungen gebildet. Die Lufteinlässe können z.B. als sektorenweise angeordnete Maschengitter ausgebildet sein. Unterhalb der Rotorebene sind in Sektoren jalousieartige, tangential verlaufende, verstellbare Lamellen 16 angeordnet, wie insbesondere aus den Fig. 3 und 4 ersichtlich ist. Im dargestellten Ausführungsbeispiel besitzen die Sektoren Winkel von 30 Grad, so dass sich insgesamt 12 solche Sektoren ergeben. Diese bilden sowohl bauliche als auch steuerungstechnische Untereinheiten.

Aus Fig. 4 sind diese Sektoren und ihre Funktionen anhand einer ersten Ausführungsvariante ersichtlich. Dabei kann in dieser Ausführung zwischen Sektoren unterschieden werden, die nur zur Erzeugung von Auftrieb im Schwebeflug dienen und solchen, die zusätzlich zur Erzeugung von Vortrieb steuerbar sind. Zur ersten Gruppe gehören die Sektoren a,b,d,e,g,h,k,l (vgl. Fig. 4). Die Lamellen in diesen Sektoren sind mittels Zügen 31,31′ paarweise gegenläufig gegenüber dem Rotorstrahl verstellbar. Die Züge 31,31′ sind je Sektor jeweils mit einem Servoantrieb 18 zur Lamellenverstellung verbunden. Die erwähnte paarweise gegenläufige Anstellung bewirkt, dass die erwähnten Sektoren der ersten Gruppe keine Vortriebskomponente, sondern in jeder Stellung lediglich eine bestimmte Auftriebskraft erzeugen. Um im Schwebeflug die Lage des Fluggeräts zur Horizontalebene zu steuern, können die Lamellen der einzelnen Sektoren mehr oder weniger geöffnet werden, so dass die Auftriebskraft im entsprechenden Sektor zu-bzw. abnimmt. So wird z.B. die Rollbewegung, d.h. die Neigung um die Längsachse 32 (Fig. 4) durch die entsprechende Steuerung der Sektorengruppen b,d und h,k bewerkstelligt. Die Nickbewegung im Schwebeflug, d.h. die Neigung um die Querachse, erfolgt durch die Steuerung der Sektorengruppen a, l und g,e.

Die Hubkraft insgesamt, welche das vertikale Steigen bzw. Sinken des Fluggeräts bewirkt, wird durch kollektives Oeffnen und Schliessen der erwähnten Lamellengruppen bewerkstelligt.

Um einen Vortrieb zu erzeugen, sei es für eine geradlinige Bewegung (vorwärts, rückwärts oder seitwärts) oder sei es für eine Rotation um die Hochachse, sind die Lamellen einer zweiten Gruppe von Sektoren m,f und c,i sowie gegebenenfalls auch einzelner der Sektoren der ersten Gruppe gleichsinnig verstellbar, so dass im Bereich des jeweiligen Sektors eine entsprechende horizontale Vortriebskraft der Auftriebskraft überlagert wird. Zusätzlich können für den horizontalen Flächenflug von der Lamellensteuerung unabhängige Vortriebsaggregate vorgesehen sein, wie noch näher erläutert wird.

Zur Erzeugung der erwähnten Drehung um die Hochachse im Schwebeflug sind in den Sektoren c und i spezielle Lamellengruppen 33 vorgesehen, deren Lamellen im wesentlichen in radialer Richtung verlaufen. In Fig. 4 sind die entsprechenden, wahlweise einstellbaren Vortriebskräfte mit Pfeilen 35 in den entsprechenden Sektoren angedeutet. Die Neutralstellung der Lamellen (d.h. die Stellung bei fehlendem Steuersignal) ist bei diesen Sektoren im Schwebeflugzustand die offene Stellung, aus welcher sie gemäss den gewünschten Flugbewegungen ausgelenkt werden.

Im Flächenflug sind die Lamellen der genannten ersten Sektorengruppe geschlossen und bilden Teil eines auftriebserzeugenden Profils. Der Vortrieb in diesem Flugzustand wird von den noch zu beschreibenden zusätzlichen Vortriebsaggregaten und/oder durch die entsprechend schräg angestellten Lamellen der Sektoren m und f sowie Lamellengruppen 33 erzeugt. Letzere bestimmen durch wahlweise Aenderung des Anstellwinkels links oder rechts der Flugrichtung 32 das Kurvenverhalten im Flächenflug. Für Notlandungen bei Ausfall des Rotorantriebs werden auch die Lamellensektoren m und f geschlossen, um die Gleiteigenschaften zu verbessern. Zur Stabilisierung des Gleitflugs können im ringförmigen Aussenteil 7 angeordnete Stabilisierungsflügel 40 ausgefahren werden (vgl. Fig. 1 und 2) , welche bei Schwebeflug im Aussenteil 7 versenkt sind.

Der in Leichtbauweise aufgebaute, ringförmige Aussenteil 7 des Gehäuses trägt gegebenenfalls die Führungen 10 der Rotoren und ist an den Streben 17 befestigt. Im Aussenteil können ferner Treibstofftanks, ein einklappbares Rollfahrwerk 41 sowie allenfalls zusätzliche Vortriebsaggregate 42 angeordnet sein (Fig. 3,4). Der Aufbau von Rotorengehäuse 1 und Aussenteil 7 ist sektorweise im wesentlich identisch, so dass eine modulare Bauweise mit relativ wenigen Komponenten möglich ist.

Das Profil des Aussenteils 7 ist zusammen mit dem Rotorengehäuse so beschaffen, dass es im Vorwärtsflug einen Auftrieb erzeugt, d.h. als Rund-Flügel wirkt.

Für das Steuerverhalten sind grundsätzlich Schwebeflug und Flächenflug zu unterscheiden. Beim Schwebeflug wird der Auftrieb sowie der Vortrieb durch die Rotoren erzeugt, während beim Gleitflug ein wesentlicher Teil des Auftriebs vom entsprechend profilierten Gehäuse 1 und Aussenring 7 sowie ein Teil des Vortriebs durch Vortriebaggregate übernommen wird. Entsprechend diesen zwei unterschiedlichen Flugsituationen erfolgt auch die Steuerung auf jeweils andere Art, wie bereits angetönt wurde.

Insgesamt ergeben sich für die beiden Flugarten je sechs Steuermöglichkeiten, welche im vorliegenden Ausführungsbeispiel mittels zwei Steuerorganen beeinflussbar sind. Die Steuerorgane sind hierzu an eine Steuerelektronik angeschlossen, welche gemäss einem Steuerprogramm die jeweiligen Servoantriebe 18 der Lamellensektoren betätigt. Die Umschaltung zwischen Schwebeflug und Flächenflug erfolgt in Abhängigkeit der Vorwärtsgeschwindigkeit selbsttätig, sobald die Anströmgeschwindigkeit am Gehäuseprofil einen entsprechenden Auftrieb gewährleistet. Die Funktionsweise der Steuerorgane bleibt hiervon unberührt, so dass die Steuerung für beide Flugzustände in gleicher Weise betätigt werden kann. Die Richtungsstabilität und die Horizontallage des Fluggeräts bei unbetätigten Steuerorganen wird in in sich bekannter Weise durch eine automatische Lamellensteuerung in Abhängigkeit einer Lagesensorik eingehalten, der die Signale der Steuerorgane überlagert werden. Das erste der beiden Steuerorgane in Form eines Steuerknüppels beeinflusst die Horizontalverschiebungen im Schwebeflug, während das zweite Steuerorgan, ebenfalls in Form eines Steuerknüppels, die Neigungen um Längs-und Querachse im Schwebeflug bzw. im Flächenflug steuert.

Im einzelnen sind damit im Schwebeflug folgende Steuervorgänge möglich:
- Steigen und Sinken durch Beeinflussung der Lamellenstellung in den Sektoren a,b,d,e,g,h,k,l. In Nulllage wird der Schwebezustand eingehalten, wobei durch die Lagesensorik, die mit der Steuerschaltung verbunden ist, die Horizontallage durch Lamellenverstellung selbständig aufrecht erhalten wird.
- Vorwärts- und Rückwärtsbewegung durch entsprechendes Auslenken der Lamellengruppen m und f aus der Vertikalstellung mit dem ersten Steuerorgan.
- Links- und Rechtsbewegung durch entsprechende Auslenkung der Lamellengruppen c und i aus der Vertikalstellung mit dem ersten Steuerorgan.
- Drehung um Hochachse durch entsprechende Auslenkung der Lamellengruppen 33 aus ihrer Vertikalstellung, um ein Drehmoment um die Hochachse zu erzeugen mit dem zweiten Steuerorgan.
- Neigen um die Querachse durch mehr oder weniger starkes Schliessen der Lamellengruppen e und g bzw. l und a mit dem zweiten Steuerorgan.
- Neigen um die Längsachse durch mehr oder weniger starkes Schliessen der Lamellengruppen h und k bzw. b und d mit dem zweiten Steuerorgan.

Entsprechende Steuervorgänge sind im Flächenflug vorgesehen, wobei die Lamellen jedoch, wie erläutert, andere Stellungen einnehmen. Es wird dabei nur noch mit dem zweiten Steuerorgan gesteuert, während das erste Steuerorgan abgeschaltet wird. Beim Flächenflug vorwärts beim beschriebenen Ausführungsbeispiel sind alle Lamellen bis auf diejenigen der Sektoren m und f sowie der Lamellengruppen 33 geschlossen. Diese weisen eine Restöffnung auf, womit der Rotorstrahl in diesen Sektoren bezüglich der Flugrichtung nach hinten abgelenkt wird. Die Drehung um die Hochachse fällt beim Flächenflug dahin. Der Kurvenflug wird durch Veränderung der Stellung der Lamellengruppen 33 aus der Restöffnung gesteuert. Zur Neigung um die Querachse im Flächenflug werden die Lamellengruppen m oder f entsprechend mehr geöffnet, was den Auftrieb im entsprechenden Bereich erhöht.

Das Lamellenprofil kann in diesen Sektoren zur besseren Umlenkung des Rotorstrahls gebogen sein, derart dass eine Strahlablenkung von ca. 70° bewerkstelligt wird, wie in Fig. 9 bei nach einer Seite hin offener und in Fig. 10 bei geschlossener Lamellen-Stellung gezeigt wird. Damit lassen sich die Verluste durch die Strahlumlenkung herabsetzen.

Wie sich aus den vorstehenden Erläuterungen ergibt, werden beim Schwebe- und beim Flächenflug jeweils dieselben Lamellengruppen für entsprechende Steuervorgänge eingesetzt, einmal aus dem offenen und das andere Mal aus dem im wesentlichen geschlossenen Grundzustand. Das zweite Steuerorgan ist dabei für Drehungen um die drei Körperachsen vorgesehen, was im Flächenflug die notwendigen Steuervorgänge ermöglicht.

Die Transition zwischen Schwebeflug und Flächenflug und zurück erfolgt nicht abrupt. Vielmehr wird der Auftrieb durch den Rotorstrahl durch Schliessen der Sektoren b,c,d und h,i.k allmählich in demselben Mass herabgesetzt, wie der dynamische Auftrieb durch Geschwindigkeitszunahme zunimmt und umgekehrt. Beim Transitionsvorgang vom Schwebeflug in den Flächenflug können dabei insbesondere die Lamellen in den Sektoren l und a sowie e und g nicht paarweise gegenläufig, sondern zur Erzeugung von entsprechendem Vortrieb gleichsinnig angestellt werden. Mit diesen Sektoren lässt sich, ähnlich wie im Schwebeflug, auch im Uebergang zum Flächenflug der Neigungswinkel des Fluggeräts zur Horizontalebene in der Flugrichtung beeinflussen.

Um im Flächenflug einen stärkeren Vortrieb zu erzielen, ist als Variante neben den beschriebenen Lamellengruppen m und f sowie den Lamellengruppen 33 ein in horizontaler Richtung wirkender Rückstossantrieb vorgesehen. Dieser kann unabhängig vom Antrieb des Rotorpaares sein, wie in Fig. 3 und 4 angedeutet. Gemäss dieser Ausführung sind im ringförmigen Aussenteil seitlich zur Hauptflugrichtung zwei Strahlturbinentriebwerke 42 angeordnet. Im Austrittsbereich ist je eine Klappe 43 an sich bekannter Art zur Umlenkung des Strahls in die Vertikalrichtung beim Schwebeflug vorgesehen. Der erzeugte Schub braucht dabei nur einen Bruchteil des Startgewichts von ca. 1100 kp zu betragen, da im Schwebeflug der Auftrieb überwiegend durch die Rotoren 2;3 erzeugt wird. Im Flächenflug dagegen übernehmen die Strahltriebwerke einen wesentlichen Teil des Vortriebs. Es kann stattdessen auch ein Propeller oben am Aussenring 7 angeordnet sein, der für den Flächenflug mit dem Antriebsaggregat kuppelbar ist.

Bei einer weiteren vorteilhaften Ausführung des erfindungsgemässen Fluggeräts gemäss den Figuren 6 und 7 dient eine Turbine 44, welche in der Kabine 9 zwischen den Sitzen angeordnet ist, sowohl für den Antrieb der Rotoren als auch zur Erzeugung von Vortrieb. Die Turbine treibt über ein Getriebe 45 (schematisch) die Rotoren, wie vorstehend bereits beschrieben. Ferner wirken die Turbinenabgase als Strahlantrieb, wobei der Strahl mittels Klappen 46 in Vertikal- und Ablenkstellung bringbar ist. Die Luftansaugöffnung 47 ist an der Unterseite der Kabine angeordnet. Im Schwebeflug lenken die Klappen 46 die Turbinenabgase in Vertikalrichtug ab und tragen somit zum Auftrieb bei (Fig. 6). Im Flächenflug tritt der Abgasstrahl im wesentlichen horizontal ein und aus.

Eine weitere Ausführung des erfindungsgemässen Fluggeräts mit einer abgewandelten Lamellenanordnung ist in Figur 8 dargestellt. Dabei dienen die Sektoren c und i zusätzlich zu den Sektoren m und f der Erzeugung von Vortrieb durch Ablenkung des Rotorstrahls. Die Lamellen 27 in diesen Sektoren verlaufen quer zur Flugrichtung und besitzen vorzugsweise ein Profil gemäss den Figuren 9 und 10, das die Verluste bei der Umlenkung des Rotorstrahls herabsetzt. Da mit dieser Anordnung im Flächenflug jeweils vier Sektoren gleichmässig über den Umfang des Rotorstrahls verteilt geöffnet sind, stellt sich im Rotorgehäuse eine gleichmässige Druckverteilung ein. Im übrigen kann betreffend die einzelnen Steuervorgänge auf die vorstehenden Ausführungen verwiesen werden.

Das in der beschriebenen Art ausgestaltete Fluggerät kann als unbemannte Drohne oder aber als bemanntes Flugzeug konzipiert sein. Es vereinigt die Vorteile des Hubschraubers mit denen eines Flächenflugzeuges in sich. Dabei kann das Fluggerät insbesondere alle Helikoptermanöver ausführen, ohne jedoch der Gefahr der Rotorberührung ausgesetzt zu sein und ohne Pendelbewegung bezüglich der Vertikalachse, welche durch die gesteuerte Luftführung eliminiert wird. Damit kann das Fluggerät z.B. für Rettungseinsätze Objekte mit Direktberührung anfliegen.Im Flächenflug sind im wesentlichen alle Flugmanöver eines konventionellen Flugzeugs ausführbar. Insbesondere können Roll-Landungen ausgeführt werden. Bei Triebwerkausfall kann das Fluggerät dank der geringen spezifischen Tragflächenbelastung aus geringer Höhe im Gleitflug notgelandet werden. Für letzteres sind am Gehäuse Stabilisatoren 40 (Fig. 2) zur Steuerung vorgesehen.

Das beschriebene Fluggerät ist trotz seiner Vielseitigkeit ökonomisch auf längere Distanzen einsetzbar, was durch die hohe Tragzahl nach dem Uebergang in den Gleit- flächenflug sichergestellt wird. Die Steuerung ist sehr einfach, indem sie natürlichen, menschlichen Reaktionsweisen entspricht und ausschliesslich mit den Händen erfolgt, so dass insbesondere eine Fusspedalbetätigung entfällt. Die Konstruktionsweise ist überdies wegen der im wesentlichen rotationssymmetrischen Bauweise der tragenden Teile gegenüber dem herkömmlichen Flugzeugbau einfach, indem die einzelnen Sektoren weitgehend einheitlich gefertigt werden können

## Patentansprüche

1. Fluggerät mit einem gegensinnig drehenden Rotorenpaar (2,3), zur Erzeugung von Auftrieb und Vortrieb, wobei das Rotorenpaar koaxial innerhalb eines Gehäuses (1) angeordnet ist, welches steuerbare Luftführungen (16) für den Rotorstrahl besitzt und dessen Aussenform mindestens bereichsweise als auftriebserzeugendes Profil ausgestaltet ist, dadurch gekennzeichnet, dass die steuerbaren Luftführungen in Sektoren (a,b,d bis h,k,l,m) angeordnete Lamellen (16,16') aufweisen, die sich im Bereich des Rotorstrahlaustritts befinden und deren Anstellwinkel sektorweise gegenüber dem Rotorstrahl steuerbar ist, wobei mindestens bei einem Teil der Sektoren jeweils zwei benachbarte Lamellen innerhalb eines Sektors paarweise gegenläufig schwenkbar sind und wobei mindestens bei einem Teil der Sektoren die Lamellen im wesentlichen tangential angeordnet sind.

2. Fluggerät nach Anspruch 1, dadurch gekennzeichnet, dass die Luftführungen Vortriebsbereiche (33; 27) aufweisen, in denen die Lamellen in ihrem Anstellwinkel gleichsinnig gegenüber dem Rotorstrahl steuerbar sind.

3. Fluggerät nach Anspruch 2, dadurch gekennzeichnet, dass in den Vortriebsbereichen (33;27) die Lamellenausrichtung im wesentlichen quer zu einer die Horizontalflugrichtung bestimmenden Längsachse (32) verläuft.

4. Fluggerät nach Anspruch 3, dadurch gekennzeichnet, dass die Lamellensektoren je etwa 30 Grad umfassen und die in der Längsachse liegenden Sektoren (m,f) sowie mindestens Teile (33) der dazu quer verlaufenden Sektoren (i,c) die Vortriebsbereiche bilden.

5. Fluggerät nach einem der Ansprüche 2 bis 4, wobei eine Steuerschaltung mit zwei Betriebszuständen vorgesehen ist, dadurch gekennzeichnet, dass im Flächenflugzustand die Lamellen in den Vortriebsbereichen von der Steuerschaltung betätigt sind und die Lamellen in den anderen Sektoren geschlossen sind, um als Auftriebsfläche zu wirken.

6. Fluggerät nach Anspruch 5, wobei eine Lagesensorik zur Ermittlung der Horizontallage vorgesehen ist, dadurch gekennzeichnet, dass im Schwebeflugzustand bzw. im Gleitflug, die Lagesensorik mit der Steuerschaltung verbunden ist, um durch Lamellensteuerung die Horizontallage selbsttätig einzustellen.

7. Fluggerät nach einem der vorangehenden Ansprüche, dadurch gekennzeichnet, dass jeder der Rotoren (2,3) einen auf Lagerrollen (11) geführten, inneren Antriebsring (12) aufweist, von dem aus sich die Rotorblätter (14) nach aussen erstrecken, wobei an den Antriebsringen (12) beider Rotoren ein gemeinsamer Antrieb (8) angreift.

8. Fluggerät nach einem der vorangehenden Ansprüche, dadurch gekennzeichnet, dass das Gehäuse (1) im wesentlichen als regelmässiges Vieleck (4) aufgebaut ist, wobei die Eckbereiche mittels radial verlaufenden Streben (17) mit einem ringförmigen Aussenteil (7) verbunden sind.

9. Fluggerät nach Anspruch 8, dadurch gekennzeichnet, dass die Streben (17)ein Dreiecksprofil aufweisen und die Lamellen (16) für den Rotorstrahl daran angeordnet sind.

10. Fluggerät nach einem der vorangehenden Ansprüche, dadurch gekennzeichnet, dass zusätzlich zu den Rotoren (2,3) ein mindestens in horizontaler Flugrichtung wirkender Antrieb (44) vorgesehen ist.

11. Fluggerät nach einem der vorangehenden Ansprüche, dadurch gekennzeichnet, dass das auftriebserzeugende Profil als Rundflügel ausgebildet ist.

12. Fluggerät nach einem der Ansprüche 2 bis 6, dadurch gekennzeichnet, dass die Lamellen in den Vortriebsbereichen ein gebogenes Profil zur Ablenkung des Rotorstrahls besitzen, während die Lamellen der anderen Sektoren im wesentlichen ein ebenes Profil besitzen.

## Claims

1. Aircraft with a pair of counterrotating rotors (2, 3) for generating lift and forward thrust, wherein the pair of rotors is coaxially arranged within a housing (1), which housing possesses controllable air guides (16) for the rotor stream and the outer shape of which housing is at least in zones formed as a lift generating profile, characterized in that the controllable air guides comprise lamellae (16, 16') arranged in sectors (a, b, d to h, k, l, m), which lamellae are located in the area of the outlet of the rotor stream and whose angle of incidence in respect to the rotor stream is controllable in each sector, wherein at least in a part of the sectors each two neighbouring lamellae within a sector are pairwise oppositely pivotal and wherein at least in a part of the sectors the lamellae are arranged substantially tangential.

2. Aircraft according to claim 1, characterized in that the air guides comprise forward thrust zones (33; 27), in which forward thrust zones the angle of incidence of the lamellae in respect to the rotor stream is controllable in the same direction.

3. Aircraft according to claim 2, characterized in that in the forward thrust zones (33; 27) the alignment of the lamellae is substantially transverse to a longitudinal axis (32) defining the direction of horizontal flight.

4. Aircraft according to claim 3, characterized in that the sectors of the lamellae each enclose approximately 30 degrees and the sectors (m, f) lying in the longitudinal axis and at last part (33) of the sectors (i, c) running transversely thereto form the forward thrust zones.

5. Aircraft according to one of the claims 2 to 4, wherein a control circuit with two modes of operation is provided, characterized in that in the plane flight mode the lamellae in the forward thrust zones are operated by the control circuit and the lamellae in the other sectors are closed to act as a lifting surface.

6. Aircraft according to claim 5, wherein a positional sensor means is provided for a determination of the horizontal position, characterized in that in the hover flight mode and the cruise mode, respectively, the positional sensor is connected to the control circuit to adjust automatically the horizontal position by controlling the lamellae.

7. Aircraft according to one of the preceding claims, characterized in that each of the rotors (2, 3) comprises an inner driving ring (12) guided on bearing rollers (11), from which driving which ring the rotors blades (14) are extending outwardly, wherein a common drive (8) acts on the driving rings (12) of both rotors.

8. Aircraft according to one of the preceding claims, characterized in that the housing (1) is substantially built as a regular polygon (4), wherein the corner zones are connected by means of radially extending struts (17) with an annular outer part (7).

9. Aircraft according to claim 8, characterized in that the struts have a triangular profile and the lamellae (16) for the rotor stream are arranged thereon.

10. Aircraft according to one of the preceding claims, characterized in that in addition to the rotors (2, 3) a drive (44) acting at least in horizontal flight direction is provided.

11. Aircraft according to one of the preceding claims, characterized in that the lift generating profile is formed as a circular wing.

12. Aircraft according to one of the claims 2 to 6, characterized in that the lamellae in the forward thrust zones have a bent profile for deflecting the rotor stream while the lamellae in the other sectors have a substantially flat profile.

## Revendications

1. Aéronef comportant un couple de rotors (2, 3) tournant en sens opposés, pour la production d'une force ascensionnelle et d'une poussée en avant, le couple de rotors étant disposé coaxialement à l'intérieur d'un carter (1), qui possède des conduits d'air commandables (16) pour le jet du rotor et dont la forme extérieure est agencée, au moins par zones, sous la forme d'un profil produisant une force ascensionnelle, caractérisé par le fait que les conduits d'air commandables possèdent des lamelles (16,16'), qui sont disposées dans des secteurs (a,b,d à h,k,l,m) et qui sont situées dans la zone de la sortie du jet du rotor et dont les angles d'attaque peuvent être commandés par secteurs par rapport au jet du rotor, et qu'au moins pour une partie des secteurs, respectivement deux lamelles voisines peuvent pivoter par couples en des sens opposés à l'intérieur d'un secteur et, au moins dans une partie des secteurs, les lamelles sont disposées essentiellement tangentiellement.

2. Aéronef suivant la revendication 1, caractérisé par le fait que les conduits d'air possèdent des zones de poussée vers l'avant (33;27), dans lesquelles les angles d'attaque des lamelles peuvent être commandés dans le même sens par rapport au jet du rotor.

3. Aéronef suivant la revendication 2, caractérisé par le fait que dans les zones de poussée vers l'avant (33;27), l'orientation des lamelles est sensiblement transversale à un axe longitudinal (32) qui détermine la direction de vol horizontale.

4. Aéronef suivant la revendication 3, caractérisé en ce que les secteurs de lamelles s'étendent respectivement sur environ 30 degrés et que les secteurs (m,f), qui sont situés sur l'axe longitudinal, ainsi qu'au moins des parties (33) des secteurs (i,c) qui s'étendent transversalement par rapport à l'axe, forment les zones de poussée vers l'avant.

5. Aéronef suivant l'une des revendications 2 à 4, dans lequel il est prévu un circuit de commande comportant deux états de fonctionnement, caractérisé par le fait que dans l'état de vol horizontal, les lamelles situées dans les zones de poussée vers l'avant sont actionnées par le circuit de commande et les lamelles situées dans les autres secteurs sont fermées de manière à agir en tant que surfaces de sustentation.

6. Aéronef suivant la revendication 5, dans lequel un système de détection de position est prévu pour la détermination de la position horizontale, caractérisé par le fait que dans l'état de vol plané ou de descente en plané, le système de détection de position est relié au circuit de commande de manière à régler automatiquement la position horizontale au moyen de la commande des lamelles.

7. Aéronef suivant l'une des revendications précédentes, caractérisé par le fait que chacun des rotors (2,3) supporte une bague intérieure d'entraînement (12), qui est guidée sur des rouleaux de palier (11) et à partir de laquelle les pales (14) du rotor s'étendent vers l'extérieur, un système commun d'entraînement (8) attaquant les bagues d'entraînement (12) des deux rotors.

8. Aéronef suivant l'une des revendications précédentes, caractérisé par le fait que le boîtier (1) est constitué essentiellement sous la forme d'un polygone régulier (4), les zones d'angle étant reliées à une partie extérieure annulaire (7) au moyen de traverses radiales (17).

9. Aéronef suivant la revendication 8, caractérisé par le fait que les traverses (17) possèdent un profil triangulaire et que les lamelles (16) pour le jet des rotors sont disposées sur les traverses.

10. Aéronef suivant l'une des revendications précédentes, caractérisé par le fait qu'en plus des rotors (2,3) il est prévu un dispositif d'entraînement (44), qui agit au moins dans la direction de vol horizontal.

11. Aéronef suivant l'une des revendications précédentes, caractérisé par le fait que le profil produisant la force ascensionnelle est réalisé sous la forme d'une pale circulaire.

12. Aéronef suivant l'une des revendications 2 à 6, caractérisé par le fait que les lamelles possèdent, dans les zones de poussée vers l'avant, un profil coudé servant à faire dévier le jet du rotor, tandis que les lamelles des autres secteurs possèdent essentiellement un profil plat.
